# EUROPEAN PATENT APPLICATION

(11) **EP 4 641 255 A1**
(43) Date of publication of application: **29.10.2025**
(21) Application number: 24172225.5
(22) Date of filing: 24.04.2024
(51) Int. Cl.: G01S 13/90, G01S 7/28, G01S 19/39

(54) **SYNCHRONIZING MULTI-STATIC OPERATION OF SYNTHETIC APERTURE RADAR PLATFORMS**

(71) Applicant: Iceye Oy, 02150 Espoo (FI); Iceye Polska Sp. z.o.o., 00-687 Warszawa (PL)
(72) Inventor: Swierczewski, Wiktor, Espoo (FI); Korczyc, Jakub, Espoo (FI)
(74) Representative: Papula Oy

(57) **Abstract**

A method of synchronizing multi-static operation of synthetic aperture radar (SAR) platforms includes receiving, by a first SAR platform, a first Global Navigation Satellite System (GNSS) clock signal transmitted from a GNSS satellite of a GNSS satellite network, and receiving, by a second SAR platform, a second GNSS clock signal transmitted from a GNSS satellite of the GNSS satellite network. The method further includes generating, by the first SAR platform, a first timing signal, generating, by the second SAR platform, a second timing signal; adjusting the first and second timing signals based on the respective first and second GNSS clock signals, and generating SAR image data. The generating includes using the first SAR platform to transmit a first SAR signal according to the adjusted first timing signal, and using the second SAR platform to record echoes of the first SAR signal according to the adjusted second timing signal.

## Description

### Field

The present disclosure relates to radar technology and in particular to methods and systems for synchronizing multi-static operation of synthetic aperture radar (SAR) platforms.

### Background

SAR is a type of imaging technology that can be used for a variety of applications such as Earth observation, mapping, object tracking, change detection (e.g., in glaciers), natural catastrophe monitoring, and many others. SAR images are a type of image created by transmitting radar pulses, receiving the reflected and scattered return echoes, and processing the return echoes in order to form the image. This is in contrast to optical imagery, a passive technology wherein images are captured by receiving light reflected or originating from an object. SAR technology, on the other hand, is an active rather than a passive technology since it relies on transmitting radar pulses instead of relying on sunlight or other light sources. A significant advantage of SAR technology over optical imagery is that SAR technology can image at night as well as through clouds and other adverse weather conditions. However, forming an image using SAR technology is generally more complex and requires significant signal processing of the returned echoes in order to generate the image.

More particularly, SAR images are acquired from a moving transceiver, such as a transceiver that comprises part of a satellite. In a conventional imaging radar, meaning a real aperture radar without pulse compression, the spatial resolution of an image generated by measuring reflections of a radar signal is directly proportional to the time duration of the transmitted radar pulse and inversely proportional to the along-track dimension of the antenna used to transmit and receive the radar signal. In other words, the longer the antenna, the finer the along-track resolution. This means that the length of the antenna that would be required to capture high-resolution images using conventional radar is often impractical, particularly for airborne use.

In contrast, SAR images are captured using a "synthetic aperture". A smaller and consequently more practical antenna is used on a moving platform to make a series of measurements of reflected radar signals, and those measurements are combined to simulate a much larger antenna. This is achieved by exploiting the Doppler effect created by the moving SAR platform. Consequently, the resolution of a SAR image corresponds to the resolution of a conventional radar image captured using an antenna much longer than the one used to capture the SAR image.

When a network or constellation of SAR satellites are operating multi-statically, the transmitter and receiver may be located on different satellites. This has several advantages over monostatic operations, in which the transmitter and receiver are co-located on the same satellite. For example, multi-static SAR systems can cover larger areas more efficiently by using multiple satellite platforms, providing broader coverage in less time compared to a single monostatic satellite. Furthermore, by employing multiple observation angles and baselines between satellites, multi-static SAR can achieve higher resolution imagery, allowing for better target discrimination and detailed mapping of surface features.

When operating multi-statically, synchronization of the transmitting and receiving satellites is important to ensure that the transmitted and received signals are properly aligned in phase and time, enabling coherent processing and maximizing the signal-to-noise ratio. However, because the transmitter and receiver in a multi-static system may be spaced apart, synchronization is generally more complex and difficult to achieve that in a monostatic system.

### Summary

According to a first aspect of the disclosure, there is provided a method of synchronizing multi-static operation of synthetic aperture radar (SAR) platforms, comprising: receiving, by a first SAR platform, a first Global Navigation Satellite System (GNSS) clock signal transmitted from a GNSS satellite of a GNSS satellite network; receiving, by a second SAR platform, a second GNSS clock signal transmitted from a GNSS satellite of the GNSS satellite network; generating, by the first SAR platform, a first timing signal; generating, by the second SAR platform, a second timing signal; adjusting the first and second timing signals based on the respective first and second GNSS clock signals; and generating SAR image data, wherein the generating comprises: using the first SAR platform to transmit a first SAR signal according to the adjusted first timing signal; and using the second SAR platform to record echoes of the first SAR signal according to the adjusted second timing signal.

Generating the SAR image data may further comprise using the first SAR platform to record echoes of the first SAR signal according to the adjusted first timing signal.

Generating the SAR image data may further comprise: using the second SAR platform to transmit a second SAR signal according to the adjusted second timing signal; and using the first SAR platform to record echoes of the second SAR signal according to the adjusted first timing signal.

Generating the SAR image data may further comprise: using the first SAR platform to record echoes of the first SAR signal according to the adjusted first timing signal; and using the second SAR platform to record echoes of the second SAR signal according to the adjusted second timing signal.

The method may further comprise: receiving, by a third SAR platform, a third GNSS clock signal transmitted from a GNSS satellite of the GNSS satellite network; generating, by the third SAR platform, a third timing signal; and adjusting the third timing signal based on the third GNSS clock signal. Generating the SAR image data may further comprise using the third SAR platform to record echoes of the first SAR signal according to the adjusted third timing signal.

The method may further comprise: receiving, by a third SAR platform, a third GNSS clock signal transmitted from a GNSS satellite of the GNSS satellite network; generating, by the third SAR platform, a third timing signal; adjusting the third timing signal based on the third GNSS clock signal. Generating the SAR image data may further comprise: using the third SAR platform to transmit a second SAR signal according to the adjusted third timing signal; and using the second SAR platform to record echoes of the second SAR signal according to the adjusted second timing signal.

Generating the first timing signal may comprise: generating a resonating signal using a crystal resonator or a crystal oscillator; and generating the first timing signal based on the resonating signal.

The crystal resonator or the crystal oscillator may have an Allan Deviation of no more than 1.3⁻¹² seconds over 30 seconds.

A skew between the first and second GNSS clock signals may be no more than 50 ns.

The first SAR signal may be transmitted according to a first polarization, and the echoes of the first SAR signal may be recorded according to a second polarization.

The first and second SAR platforms may be SAR satellites.

The SAR satellites may be orbiting the Earth in Low Earth Orbit (LEO).

Each of the first and second SAR platforms may comprise a single-polarized SAR antenna configured to transmit and receive SAR signals having only a single polarization.

The generated SAR image data may comprise amplitude data and phase data.

According to a further aspect of the disclosure, there is provided a system for synchronizing multi-static operation of synthetic aperture radar (SAR) satellites, comprising: at least a first SAR platform and a second SAR platform; and one or more computer-readable media storing computer program code configured, when executed by one or more processors, to cause the one or more processors to: receive, by the first SAR platform, a first Global Navigation Satellite System (GNSS) clock signal transmitted from a GNSS satellite of a GNSS satellite network; receive, by the second SAR platform, a second GNSS clock signal transmitted from a GNSS satellite of the GNSS satellite network; generate, by the first SAR platform, a first timing signal; generate, by the second SAR platform, a second timing signal; adjust the first and second timing signals based on the respective first and second GNSS clock signals; and generate SAR image data, wherein the generating comprises: using the first SAR platform to transmit a first SAR signal according to the adjusted first timing signal; and using the second SAR platform to record echoes of the first SAR signal according to the adjusted second timing signal.

According to a further aspect of the disclosure, there is provided a method of synchronizing multi-static operation of satellite for use in target location, comprising: receiving, by a first satellite, a first Global Navigation Satellite System (GNSS) clock signal transmitted from a GNSS satellite of a GNSS satellite network; receiving, by a second satellite, a second GNSS clock signal transmitted from a GNSS satellite of the GNSS satellite network; generating, by the first satellite, a first timing signal; generating, by the second satellite, a second timing signal; adjusting the first and second timing signals based on the respective first and second GNSS clock signals; using the first satellite to record, according to the adjusted first timing signal, a transmission from a source; using the second satellite to record, according to the adjusted second timing signal, the transmission from the source; and determining, based on the recordings, a location of the source.

This summary does not necessarily describe the entire scope of all aspects. Other aspects, features, and advantages will be apparent to those of ordinary skill in the art upon review of the following description of specific embodiments.

### Drawings

Embodiments of the disclosure will now be described in detail in conjunction with the accompanying drawings of which:
FIG. 1 is a schematic diagram of a SAR satellite orbiting the Earth, according to an embodiment of the disclosure;
FIG. 2 is a schematic diagram of a ground station relaying SAR image data from a SAR satellite to a SAR processing station, according to an embodiment of the disclosure;
FIG. 3 is a schematic diagram of a computing device configured to process and generate SAR image data, according to an embodiment of the disclosure;
FIG. 4 is a schematic diagram of SAR satellites receiving GNSS clock signals from GNSS satellites, according to an embodiment of the disclosure;
FIG. 5 is a schematic diagram of hardware and software components of a SAR satellite, according to an embodiment of the disclosure;
FIG. 6 is a schematic diagram of an attitude determination and control system (ADCS) receiving a GNSS clock signal from a GNSS satellite, and communicating with a timing module which then communicates with a digital radar board module, a transceiver module, and an on-board computer module, according to an embodiment of the disclosure;
FIG. 7 is a schematic diagram of a clocking tree of the timing module, according to an embodiment of the disclosure;
FIG. 8 is a schematic diagram of operational flow of a clock synchronizer of the timing module, according to an embodiment of the disclosure; and
FIG. 9 schematically illustrates an example of three different satellites transmitting according to different timing accuracies and precisions.

### Detailed Description

The present disclosure seeks to provide novel methods and systems for synchronizing multi-static operation of SAR platforms. While various embodiments of the disclosure are described below, the disclosure is not limited to these embodiments, and variations of these embodiments may well fall within the scope of the disclosure which is to be limited only by the appended claims.

In a typical multi-static SAR operation, the conventional way to achieve multi-static phase and time synchronization is to exchange synchronization pulses between the satellites. In particular, each satellite in the multi-static SAR network has its own onboard timing reference, typically a high-precision clock or oscillator. This timing reference serves as the basis for generating timing signals and synchronizing the satellite's operations. Periodically, each satellite broadcasts synchronization pulses containing timing information derived from the satellite's onboard clock. Other satellites in the network receive these synchronization pulses and, upon reception, the timing information embedded in the synchronization pulses is extracted and used to adjust the timing of the receiving satellite's operations. Based on the received synchronization pulses, each satellite adjusts its internal clock or timing signals to align with the timing of the transmitting satellite. This adjustment ensures that all satellites in the network operate in phase and maintain precise time synchronization.

There are various problems with the use of synchronization pulses. For example, in order for the pulses to be received at a receiving satellite, the orientation of the transmitting/receiving satellite and/or the orientation of the transmitting/receiving satellite's antenna needs to be carefully considered, which is complex and hard to scale beyond two satellites. In addition, synchronization pulses are susceptible to interference and noise, which can degrade the accuracy and reliability of timing information exchange.

The present disclosure therefore describes novel methods and systems for synchronising the time, frequency, and phase of multiple SAR platforms using the combination of one or more clock signals derived from one or more Global Navigation Satellite Systems (GNSS) as well as each SAR platform's on-board ultra-stable oscillator. As described in further detail below, such methods avoid the need for inter-satellite communication, which can lead to simplification of the satellites themselves, for example by not requiring dedicated inter-satellite communication systems, and can also lead to simplification of the operations of the satellites by removing the need for right pointing (ensuring that the satellites are oriented appropriately and pointed at each other to enable communications). Avoiding the need for inter-satellite communication can also help to make the overall system more scalable, for example by requiring fewer inter-satellite messages to be passed, thereby avoiding the associated delays with additional message transmission, and also avoiding the need for satellites to orient themselves for communication with more than one satellite, which can require additional manoeuvers and can be problematic, especially with many satellites. In particular, embodiments of the disclosure are directed at SAR satellites wherein the timing and frequency of the satellites' communications are synchronised to a GNSS receiver (such as a Global Positioning System (GPS) receiver), while the phases of the satellites' communications are synchronized using one or more on-board ultra-stable oscillators. The methods and systems described herein may be advantageous because multiple satellites can be synchronised to one source (i.e., a GNSS satellite network), thereby obviating the complexity of exchanging synchronisation pulses or messages between satellites in orbit.

According to embodiments of the disclosure, there is described a method of synchronizing multi-static operation of SAR platforms. The method includes receiving, by a first SAR platform, a first Global Navigation Satellite System (GNSS) clock signal transmitted from a GNSS satellite of a GNSS satellite network. The method further includes receiving, by a second SAR platform, a second GNSS clock signal transmitted from a GNSS satellite of the GNSS satellite network. The method further includes: generating, by the first SAR platform, a first timing signal; generating, by the second SAR platform, a second platform signal; adjusting the first and second timing signals based on the respective first and second GNSS clock signals; and generating SAR image data.

Generating the SAR image data includes using the first SAR platform to transmit a first SAR signal according to the adjusted first timing signal, and using the second SAR platform to record echoes of the first SAR signal according to the adjusted second timing signal.

Advantageously, GNSS clock signals transmitted by the GNSS satellites of a GNSS satellite network are based on timing signals derived from atomic clocks, typically cesium or rubidium atomic clocks. Such timing signals are highly stable over relatively long periods of time, and therefore the GNSS clock signals can be used to periodically correct for long-term drift in a satellite's master clock, and to synchronise the time and frequency of the on-board master clock. Meanwhile, the phase of the generated SAR pulses may be synchronised using the on-board master clock, in this case an ultra-stable oscillator.

When transmitting the SAR signal, the transmitting SAR satellite may generate a timing signal using the ultra-stable oscillator. For example, according to some embodiments, the ultra-stable oscillator may have an Allan Deviation of no more than 1.3 × 10⁻¹² seconds over 30 seconds. Using the timing signal from the ultra-stable oscillator, a sequence of SAR pulses may be generated according to the timing signal (e.g., the phase of the pulses will match the phase of the timing signal output by the oscillator). Natural drift in the timing signal over extended periods of time may then be corrected by using the GNSS clock signal received at the transmitting satellite. In other words, the timing signal may be periodically synchronised using the GNSS clock signal.

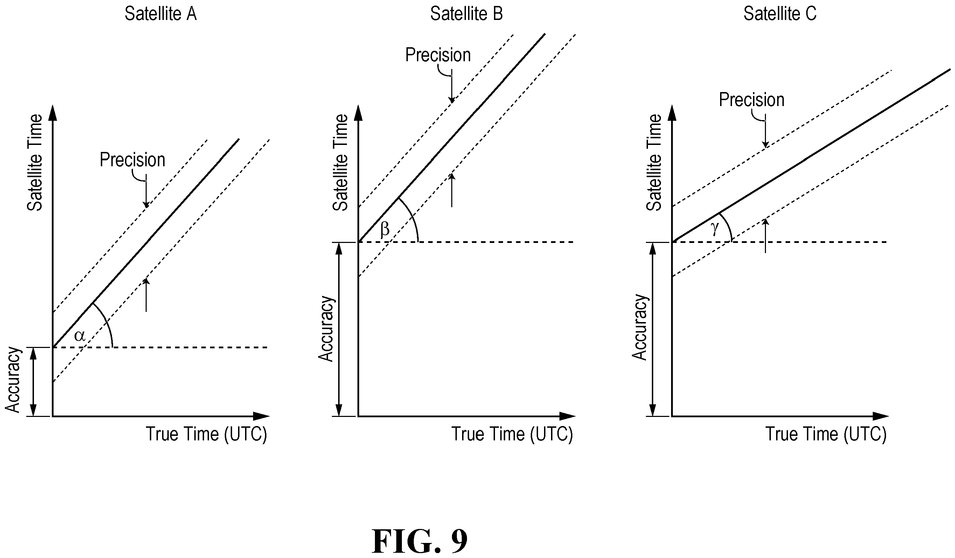

FIG. 9 schematically illustrates an example of three different satellites (A, B, and C) transmitting according to different timing accuracies and precisions.

Satellite A has an ultra-stable clock which has some clock drift from "perfect" UTC time, shown by the "accuracy" arrow. Satellite B also has an ultra-stable clock which has some clock drift (different from Satellite A's clock drift) from "perfect" UTC time, shown by the "accuracy" arrow. Satellite C does not have an ultra-stable clock, and instead uses a clock with insufficient stability for the SAR applications described herein. Similarly to Satellite B, Satellite C has some drift from "perfect" UTC time.

The ultra-stable clocks of Satellites A and B help to keep the angles α and β close to one another so that, as time elapses, the clock signals and phases measured at Satellites A and B are about the same, or within an acceptable error range (e.g., 40 picoseconds over 30 seconds). Satellites A and B can have different clock skews, shown using the different degrees of "accuracy" in the drawings. This difference is a result of clock drift on both Satellites A and B, and over long periods of time it can be compensated for by using a GNSS clock signal.

By comparison, Satellite C's master clock will experience a linear phase drift over long periods of time, much larger than can be tolerated for the SAR applications described herein. Even if a GNSS clock signal were used to re-synchronise Satellite C's master clock, such re-synchronization would have an accuracy of about +/- 10 nanoseconds (i.e., the accuracy of the GNSS clock signal), much larger than the required phase coherence of tens of pico-seconds for the SAR applications described herein.

Detailed embodiments of the disclosure will now be described in connection with the drawings.

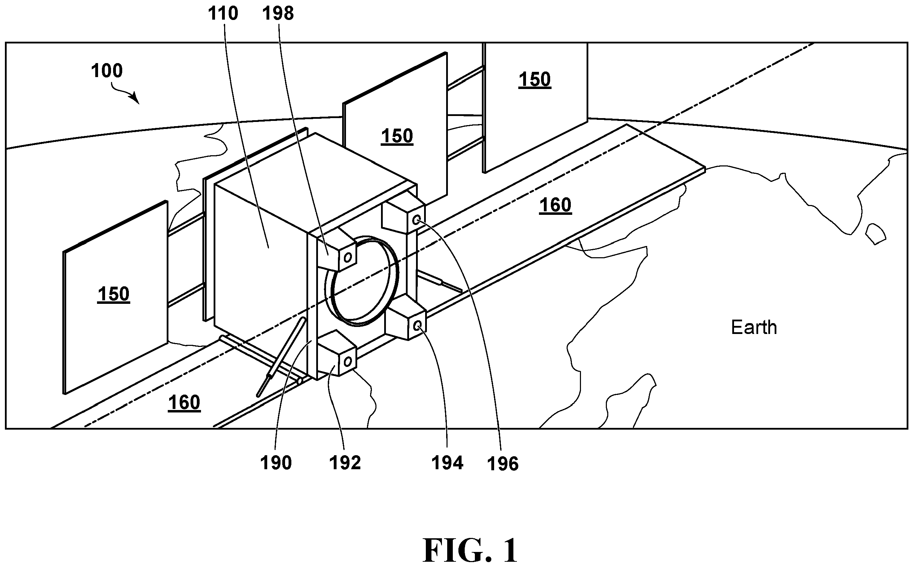

FIG. 1 depicts an exemplary satellite 100 in orbit around the Earth of the kind which may be used in the implementation of methods described herein. Satellite 100 comprises a body 110 which may be referred to in the art as a "bus" since it may house or support so-called bus components of a satellite. Body 110 may additionally house one or more batteries. Body 110 may be partially enclosed, for example to house and protect components. A housing may provide surfaces on which components may be mounted. In the example of FIG. 1, a solar panel is mounted on one rectangular surface of body 110 and additional solar panels 150 may be attached to this solar panel by struts.

Satellite 100 comprises a radar antenna array 160 in the form of a generally planar structure extending from bus 110 in two opposing directions to provide two "wings". The structure comprising wings 160 is shown to be mounted on or adjacent to a rectangular surface of body 110. Body 110 and wings 160 of satellite 100 may be collectively referred to as the spacecraft frame. Antenna array 160 together with associated amplifiers and a power distribution system (not shown) collectively form an image acquisition apparatus of satellite 100.

As described above, in a synthetic aperture radar system (SAR system), antenna array 160 is operated to transmit radar signals to the Earth and receive returning echoes or reflections of these signals. By recording the echoes, an image of the Earth's surface can be constructed from the data, including the length of time taken for the echo to return (indicating location), the amplitude of the radar return, and the phase information that is included within the radar return. Further location information is obtained from the frequency of the radar return which is shifted due to the Doppler effect as a result of the motion of satellite 100 relative to the Earth.

Satellite 100 is provided with a propulsion system 190 for manoeuvring satellite 100 with a generated thrust. Propulsion system 190 comprises a plurality of thrusters 192, 194, 196, 198 that produce thrust for manoeuvring satellite 100 when required, for example to position satellite 100 onto a different orbital track. Thrusters 192, 194, 196, 198 shown in FIG. 1 are positioned at the corners of one side of body 110 and may be equally spaced apart. However, in other embodiments, propulsion system 190 may have a different configuration.

In some embodiments, satellite 100 may be orbiting Earth in a low-earth orbit. A low-earth orbit may have an altitude between 160 kilometres and 1,000 kilometres above the surface of the Earth. Examples of Earth-observation satellites operating SAR payloads can accordingly have orbits with an altitude of between 450 kilometres and 650 kilometres above the Earth. In one particular example, a SAR satellite may have an orbit that is approximately 550 kilometres above the Earth's surface. At an orbit of 550 kilometres above the Earth, the satellite may be effectively traversing the ground at approximately 7.5 kilometres per second, or 27,000 kilometres per hour. Most satellites in such an orbit will traverse the Earth at a speed that is in the range of 7-8 kilometres per second.

As a SAR satellite operates its SAR payload and receives radar returns, it accumulates raw "SAR data". Raw SAR data generally comprises the recorded radar signals as they are received by the SAR sensor. These signals are typically represented as complex-valued numbers, where each complex value consists of two components: the in-phase (I) component and the quadrature (Q) component. SAR data is typically received and processed in I and Q channels, and therefore it is traditional to represent SAR data in this form. These components correspond to the real and imaginary parts of the complex number and contain the information necessary to derive the amplitude and phase of the received radar signal. In order to construct an image corresponding to the SAR data, the data must be processed. While in theory the data may be processed by any suitable computer processor, even a computer processor onboard the satellite, it is more typical for the raw SAR data to be first transmitted or downlinked from the SAR satellite to a ground station on the Earth's surface. The data can be downlinked whenever the SAR satellite has line of sight to the ground station. The downlinked SAR data is then typically relayed to a SAR processing station which performs the necessary processing of the SAR data, as now described in further detail.

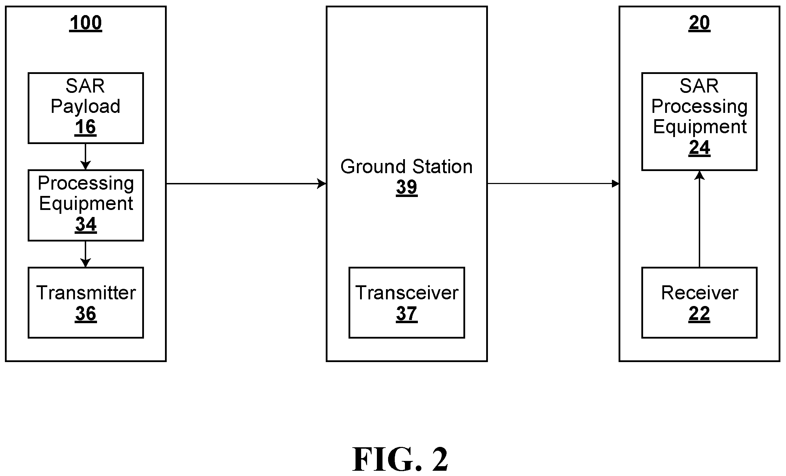

In particular, referring to FIG. 2, there is shown a schematic diagram of hardware components onboard satellite 100 being used to allow satellite 100 to communicate with a SAR processing station 20 on the Earth's surface. SAR processing station 20 houses the computer hardware components that are used to process the SAR data and generate the SAR images. Typically, satellite 100 will first downlink the SAR data to a ground station 39, and ground station 39 will relay (using a wired or wireless communication link) the downlinked SAR data to SAR processing station 20. However, it is possible, according to some embodiments, for ground station 39 to process the SAR data, in which case ground station 39 effectively performs the function of SAR processing station 20. SAR processing station 20 can be an office, an operations station, or any other location comprising any computer device (such as a laptop) capable of processing the SAR data. The SAR processing may also be carried out using cloud computing, for example through the use of multiple processors operating in parallel, in which case SAR processing station 20 is the location at which the SAR data is received and passed to the cloud.

Generally, satellite 100 includes a SAR payload 16 (e.g., comprising antenna array 160), satellite processing equipment 34, and a transmitter 36. Meanwhile, SAR processing station 20 includes a receiver 22 and SAR Processing Equipment 24. Satellite processing equipment 34 and SAR Processing Equipment 24 comprise suitable computer processors, comprising circuitry, and computer-readable media configured to perform various functions, such as the ones described herein. Ground station 39 includes a transceiver 37 (or a separate transmitter and receiver) for relaying the SAR data from satellite 100 to SAR processing station 20. For example, relaying the SAR data from ground station 39 to SAR processing station 20 can be performed through a wired or wireless terrestrial network. According to some embodiments, if satellite 100 is not in direct communication with ground station 39, the SAR data can be relayed to ground station 39 via another satellite or an aircraft.

During operation, data captured by SAR payload 16 is passed to satellite processing equipment 34 for pre-processing (which may include, for example, basic compression/encoding/packaging). Following pre-processing, the pre-processed data is passed to transmitter 36 which transmits or otherwise downlinks the data to transceiver 37 of ground station 39. Transceiver 37 of ground station 39 then relays the SAR data to receiver 22 of SAR processing station 20. Receiver 22 passes the data to SAR Processing Equipment 24 which processes the data.

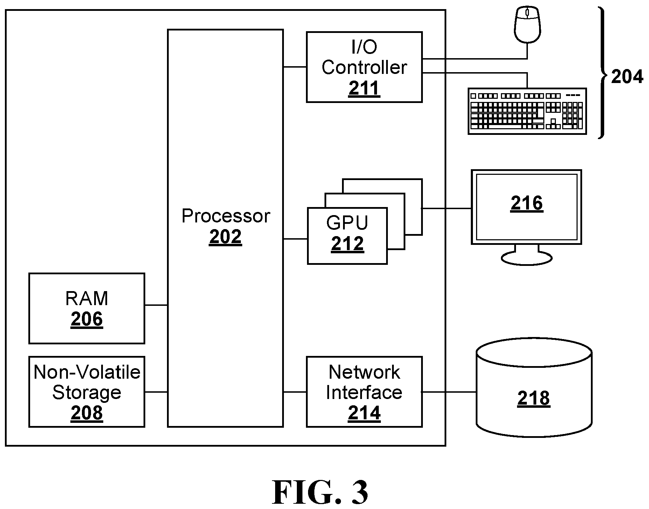

Turning to FIG. 3, there is shown an example of hardware components in SAR Processing Equipment 24. In particular, a computer system 200 comprises a processor 202 that controls computer system's 200 overall operation. Processor 202 is communicatively coupled to and controls several subsystems. These subsystems comprise an input/output ("I/O") controller 211, which is communicatively coupled to user input devices 204. User input devices 204 may comprise, for example, any one or more of a keyboard, mouse, touch screen, and microphone. The subsystems further comprise random access memory ("RAM") 206 which stores computer program code for execution at runtime by processor 202; non-volatile storage 208 which stores the computer program code executed by RAM 206 at runtime; graphical processing units ("GPU") 212 which control a display 216; and a network interface 214 which facilitates network communications with a database 218. Non-volatile storage 208 has stored on it computer program code that is loaded into RAM 206 at runtime and that is executable by processor 202. When the computer program code is executed by processor 202, processor 202 causes computer system 200 to generate SAR image data. Additionally or alternatively, multiple of computer systems 200 may be networked together and collectively perform that method using distributed computing.

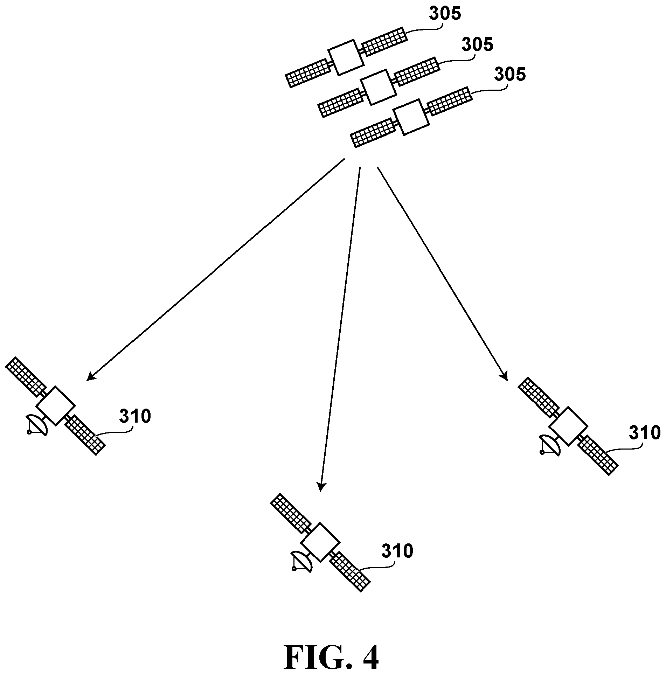

Turning now to FIG. 4, there is shown is a schematic diagram of SAR satellites 310 receiving GNSS clock signals from GNSS satellites 305 of a GNSS satellite network. While three SAR satellites are shown in FIG. 4, the methods described herein may be used with any network or constellation of two or more SAR satellites. As a result, the methods described herein may be used for various multi-static (including bi-static) operations:
- Bi-static operations (standard): Two satellites operating together, with satellite A transmitting and receiving, and satellite B receiving only. Alternatively, satellite A may transmit, and only satellite B may receive. Although the quality of received data may be poorer when using only a single receiver, in this scenario each satellite need only perform a single function (transmit or receive), which may have certain advantages in terms of simplicity.
- Multi-static operations (standard): Three or more satellites operating together, with at least satellite A transmitting and optionally receiving also, and at least satellites B and C (or more) receiving only.
- Bi-static operations (advanced): An extension of the standard bi-static mode, in which both satellites A and B transmit and both satellites A and B receive. In an example, the transmit pulses transmitted by satellites A and B can be interleaved with one another, transmitted simultaneously to one another (e.g., in different polarizations), or transmitted in different frequency bands.
- Multi-static operations (advanced): An extension of the standard multi-static mode. In multi-static advanced operations, two or more satellites transmit (and optionally receive also) and one or more satellites receive. In an example, the transmit pulses transmitted by the transmitting satellites can be interleaved with one another, transmitted simultaneously to one another (e.g., in different polarizations), or transmitted in different frequency bands.

Because of the greater number of receivers and/or transmitters in multi-static operations, there may be improved ability to detect various types of objects (e.g., man-made objects), for example by being able to image a scene from more angles.

Each satellite may use different imaging modes, including spot, strip, spotlight extended, and scan:
- Spot Imaging: high-resolution images of specific areas.
- Strip Imaging: continuous imaging along the satellite's path for wide coverage.
- Spotlight Extended Imaging: focused and detailed observation of specific targets for longer periods.
- Scan Imaging: systematic coverage of large areas in a grid-like pattern.

While the spotlight mode permits relatively lenient specifications (considering the typically available > 30 kHz of Doppler bandwidth), the stripmap mode may impose stricter requirements, requiring for example a maximum deviation of 500 Hz to meet a specified 2,700 Hz limit. Therefore, according to some embodiments, the frequency accuracy of the transmit pulses (i.e., the accuracy of the pulse repetition frequency (PRF) at which are transmitted the transmit pulses) may be set to a maximum deviation of t500 Hz.

According to some embodiments, phase coherence requires synchronization or skew to not exceed a certain threshold over the long term, for example 10, 20, or 50 nanoseconds (ns), ensuring alignment of timing over extended durations with the consistency of GNSS time/phase accuracy. At the same time, achieving phase coherence also requires a much tighter tolerance of 40 picoseconds (ps) between pulses during the image acquisition itself, which generally occurs over a much shorter term (e.g., ≤ 30 seconds for a single image). Alternatively, this can be expressed as an Allan Deviation (ADEV) of approximately 1.3 × 10⁻¹² over 30 seconds. As described above, the short-term stability may be provided by the ultra-stable oscillator's phase stability, while the long-term stability may be provided by periodically synchronizing or otherwise compensating for natural drift in the oscillator's stability using the received GNSS clock signal.

As a rule of thumb, the time stability required for phase coherence is approximately 1/10^{th} of the width of the transmitted pulse. Given a pulse bandwidth of 1.2 GHz, the pulse width is approximately 833 ps. Therefore, according to some embodiments, the time stability required for phase coherence may be set to 40 ps (taking into account the paths of the both the transmit pulse and the reflected or backscattered pulse) for a maximum imaging duration of 30 seconds.

According to some embodiments, each satellite's onboard clock generation unit produces phase-coherent clock signals for all relevant nodes, and synchronizes the radar analogue-to-digital converter (ADC), the radar digital-to-analogue converter (DAC), the transmit local oscillator signal (LO), and the receive local oscillator signal (LO) to within 40 picoseconds each.

Post-processing of the SAR image may also be used to compensate for long-term drift between two or more clocks on two or more satellites. For example, using FIG. 9 as an example, satellites A and B have slightly different "accuracy". This is due to the fact that, while both satellites synchronize to the clock signal output by the GNSS satellite network, this synchronization has some error, and so both satellites will present some skew from "true" GNSS time, as depicted by the different accuracy arrows in FIG. 9. Because of this skew, the time measured on satellites A and B at the start of the SAR image capture will be slightly different. However, provided that the skew is constant for the duration of the image, the skew can be compensated for by using suitable image processing techniques.

According to some embodiments, the synchronizations of the transmit and receive operations on two or more satellites should be accurate to within a certain threshold, for example <~ 100 ns, <~ 150 ns, or <~ 250 ns. The threshold depends on the satellite system and its associated hardware, and in particular on the guard period, which is the period of time between ending a transmission and beginning a receiving/recording operation, and vice versa. This level of accuracy is obtainable over the long term by synchronizing the two or more satellites using the GNSS signal, which is accurate to around 20 ns using a single band, and could be accurate to 10 ns if more than one band is used.

According to some embodiments, the maximum duration of an imaging operation is 30 seconds, and the PRF is 2 - 20 kHz.

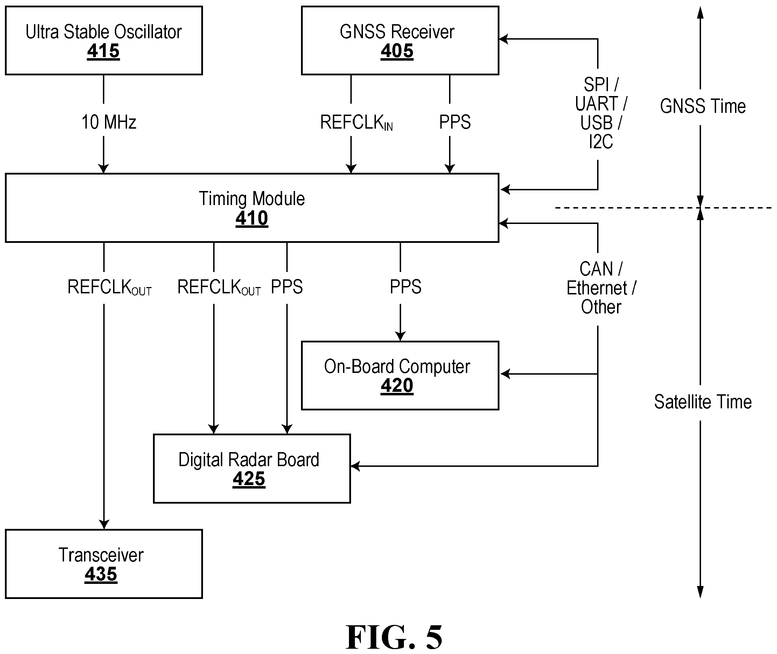

Turning now to FIG. 5, there is shown a schematic diagram of hardware and software components of a SAR satellite, according to an embodiment of the disclosure.

As can be seen, an ultra-stable oscillator 415 transmits an ultra-stable oscillator reference clock signal (for example, a 10 MHz signal) to a timing module 410. A GNSS receiver 405 transmits a pulse-per-second (PPS) reference clock signal to timing module 410. The PPS reference clock signal is a clock signal with a 1 Hz frequency, used to further enhance time synchronisation between GNSS receiver 405 and other embedded nodes in the system. Optionally, GPS receiver 405 can also transmit a higher-frequency GNSS reference clock signal (for example, a 10 MHz reference clock signal) to timing module 410. The GNSS reference clock signal is a clock signal retrieved from the GNSS signal that is received at GNSS receiver 405 from the GNSS satellite network.

Timing module 410 communicates with GNSS receiver 405 using an embedded interface (for example, UART, SPI, USB, or I2C) to retrieve GNSS time data (which may be referred to as "time of day" data and which comprises information relating to the current date and time to an approximate 1-second resolution). Timing module 410 then broadcasts the corrected and compensated "time of day" information to an on-board computer module 420 as well as a digital radar board module 425 using CAN, Ethernet, or another embedded interface. Timing module 410 jitter-attenuates (e.g., cleans) PPS reference clock signal coming from GNSS receiver 405 and passes the jitter-attenuated PPS reference clock signal to on-board computer module 420 as well as a digital radar board module 425. In addition, timing module 410 generates a reference clock signal which is passed to digital radar board module 425 and to a transceiver module 435, that have the stability characteristics of ultra-stable oscillator 415 and are in-sync (i.e., phase and frequency-synchronised) with PPS reference clock signal (and/or the higher-frequency GNSS reference clock signal).

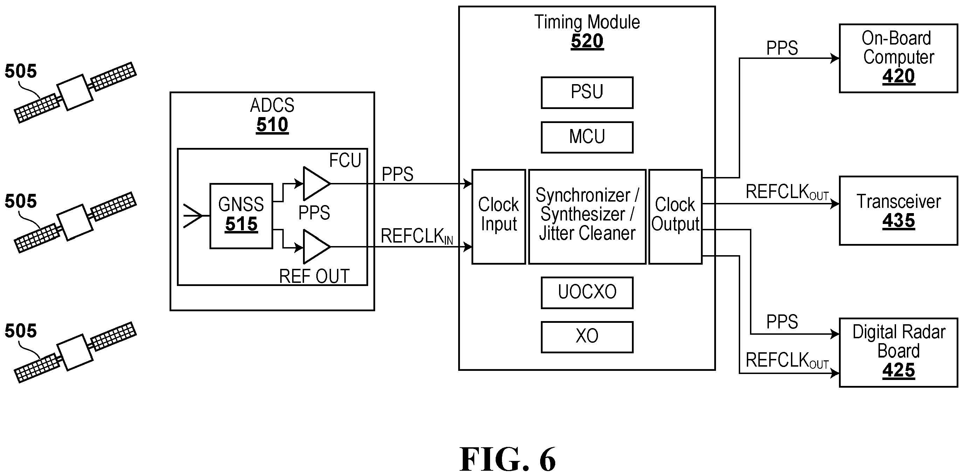

Turning to FIG. 6, there is shown a schematic diagram of an attitude determination and control system (ADCS) 510 receiving a GNSS clock signal from a GNSS satellite 505, and communicating with a timing module 520 which then communicates with digital radar board module 425, transceiver module 435, and an on-board computer module 420.

As can be seen, a GNSS receiver module 515 outputs the PPS reference clock signal ("PPS") and REFCLK_{IN} (the optional, higher-frequency GNSS reference clock signal) that are synchronised (in frequency and phase) to the received GNSS clock signal. PPS and REFCLK_{IN} are connected to timing module 520 to enable GNSS-disciplining of an ultra-stable oscillator, as described in further detail below. Timing module 520 outputs PPS and REFCLK_{OUT} to digital radar board module 425, REFCLK_{OUT} to radar transceiver module 435, and PPS to on-board computer module 420.

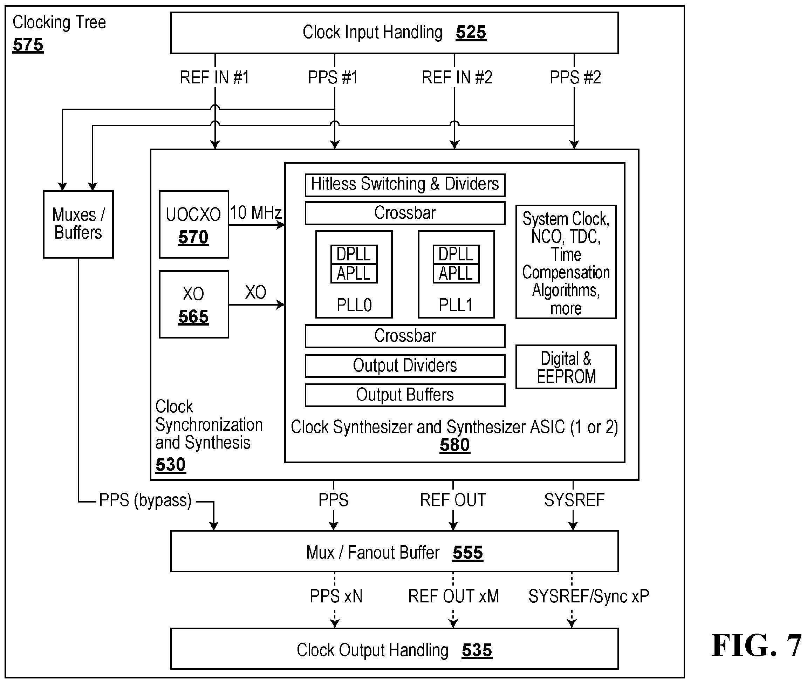

FIG. 7 shows in more detail a clocking tree 575 of timing module 410. FIG. 7 shows only one example embodiment of a clocking tree that may be used, and the disclosure extends to other clocking tree architectures. For example, if using an ultra-stable oscillator with a built-in GNSS discipline oscillator, then the architecture of synchronizer module 530 would be simplified. The diagram shown in FIG. 7 assumes that synchronizer module 530 does not include an ultra-stable oscillator with a built-in GNSS disciplined oscillator. In some examples, timing module 410 can also comprise a processor and a power tree (not shown).

Clocking tree 575 comprises clock input module 525, synchronizer module 530, and clock output module 535. Clock input module 525 comprises circuits responsible for tasks such as input signal buffering, signal conversion from single-ended to differential and vice versa, AC coupling, and multiplexing. Clock output module 535 comprises circuits designed to manage outgoing clock signals. These circuits typically include functionalities such as buffering, signal conversion from single-ended to differential and vice versa, performing AC coupling, multiplexing, or any other similar tasks aimed at preparing clock signals for downstream transmission. Synchronizer module 530 comprises circuits, whether they are integrated into an ASIC or exist as standalone units, intended for various purposes such as synchronization, frequency synthesis, and improving signal quality through cleanup or jitter attenuation.

### Time synchronization and distribution

As described above, timing module 410 reads "time of day" data from GNSS receiver 405 and broadcasts the jitter-attenuated "time of the day" data to on-board computer module 420 and digital radar board module 425 used as a radar payload controller, a radar baseband, and radar data storage. The assumed time accuracy is 20 ns at worst with a single-band GNSS receiver, and 10 ns at worst with a dual-band GNSS receiver. The GNSS PPS reference clock signal is passed to synchroniser and synthesiser 530. Synchroniser and synthesiser 530 is configured for internal zero delay mode to lock onto the input PPS reference clock signal, using the feedback from one of its outputs (50 mHz loop bandwidth). The PPS signal output by synchroniser and synthesiser 530 is both jitter-attenuated and in-phase with the GNSS PPS signal input to synchroniser and synthesiser 530. Fanout buffers 555 provide a buffered PPS signal to on-board computer module 420 and digital radar board module 425. The PPS output signals can be manually skewed by a constant value to compensate for constant skews added by RF cabling, GPS antenna cabling, etc.

### Phase and frequency synchronisation and distribution

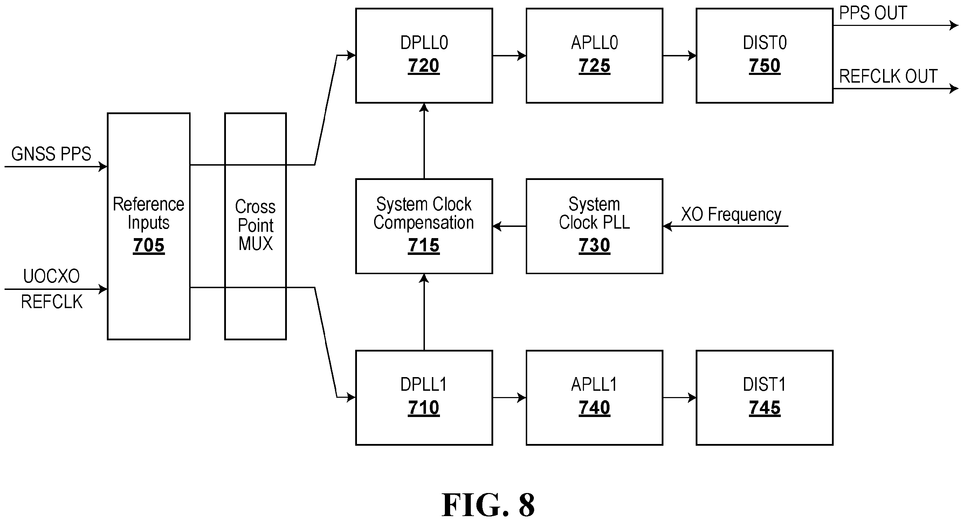

### Setup of synchronizer and synthesiser 530 (referring to FIG. 8):

- Input clocks:
   ∘ INPUT #1 = GNSS PPS
   ∘ INPUT #2 = GNSS 10 MHz (optional)
   ∘ INPUT #3 = UOCXO REFCLK, ultra-stable oscillator 10MHz
   ∘ INPUT #4 = XO Frequency, crystal oscillator (XO) system clock
- Output clocks:
   ∘ OUTPUT #1 = PPS OUT, 1 Hz PPS to time distribution network;
   ∘ OUTPUT #2 = REFCLK OUT, 10 MHz (with an internal 1 Hz embedded clock to create the 1 Hz DPLLO loop in internal zero delay);
   ∘ OUTPUT #3 = 10 MHz to clock reference distribution network (not shown);
   ∘ OUTPUT #4 = SYSREF, periodic synchronisation signal for down-stream PLLs (optional);
- PLL setup:
   ∘ DPLLO set for internal zero delay mode to lock onto INPUT #1 (GNSS 1 PPS), with the feedback from OUTPUT #2, 50 mHz loop bandwidth;
   ∘ DPLL1 set in phase buildout mode from INPUT #3;
- Other:
   ∘ System clock compensation based on DPLL1 to compensate DPLLO and TDCs.

FIG. 8 schematically illustrates operations within clock synchronizer 580 according to one embodiment. As can be seen in FIG. 8, INPUT #1 (GNSS PPS) and #3 (UOCXO REFCLK, ultra-stable oscillator 10 MHz,) are passed to reference inputs block 705. INPUT #2 (GNSS 10 Mhz) is optional and not shown in FIG. 8. INPUT #1 is then passed to a Digital Phase Lock Loop block, DPLLO (block 720) and INPUT #3 is passed to DPLL1 (block 710). INPUT #4 (XO Frequency, output by crystal resonator 565) is passed to system clock PLL (block 730), the output of which is then passed to a system clock compensation block (block 715). DPLL1 is synchronised to UOCXO REFCLK, the ultra-stable 10 MHz reference (INPUT #3). The output of synchronized DPLL1 is passed to system clock compensation block 715 which is then used to compensate DPLLO (block 720) and Time-to-Digital Converters (TDCs).

DPLLO is synchronised to input GNSS PPS reference (INPUT #1). According to an example, DPLLO can be set for zero delay mode; one of the DIST0 (block 750) output clocks is looped back internally to a DPLLO input (block 720) to compensate for clock skew between the reference input and the clock output. As a result, PPS OUT is in-phase with GNSS PPS in. In DPLLO (block 720), the clock frequency and the phase are compensated based on the frequency tuning word (FTW) error estimated by DPLL1 (block 710) by the running of ultra-stable oscillator.

Timing module 520 uses fanout buffers 555 to generate a minimum of 5 PPS clocks and a minimum of 2 reference clocks, as required by all the end points that need time synchronisation or all units that need phase / frequency synchronisation.

All PPS and all reference clocks are provided using length-matched RF cables, so that skew at each end is the same between individual endpoints.

Synchronizer module 530 comprises two separate phase-locked loops (PLLs), denoted as PLL0 and PLL1. Each PLL is comprised of a digital phase-locked loop (DPLL, blocks 710 and 720 in FIG. 8) and an analog phase-locked loop (APLL, blocks 740 and 725 in FIG. 8). The primary role of synchronizer module 530 is to receive the GNSS clock signal through one of its reference inputs and distribute it to one or more outputs using the pathways provided by PLL0 and PLL1. Additionally, synchronizer module 530 performs frequency translation between the input and output(s) based on a programmed ratio while simultaneously reducing the effect of the jitter present in the input signal.

In certain configurations, synchronizer module 530 can accommodate up to four reference input clock signals ranging from 1 Hz to 750 MHz. Each reference input is equipped with a dedicated reference monitor to detect any loss or compromise in the reference signal. Synchronizer module 530 can identify reference faults and automatically switch to another valid reference input according to user-defined priority.

The DPLL section of each PLL channel may include a programmable digital loop filter with low loop bandwidth capability that effectively reduces the transfer of jitter from the reference input to the output. In an example, each DPLL achieves precise frequency translation using a 48-bit Numerically Controlled Oscillator (NCO) capable of generating clock signals within the range of 162 MHz to 350 MHz. Moreover, both DPLLs can support manual or automatic transition to holdover operation.

During holdover operation, synchronizer module 530 generates an output frequency synthesized from the system clock rather than translating a frequency from a reference input. Synchronizer module 530 continuously provides an output clock signal during holdover while the system clock is active. Additionally, synchronizer module 530 can determine the holdover output frequency based on the time-based average of the output frequency history before transitioning to holdover operation.

The output signal from the DPLL is directed to the input of the APLL, which up-converts the signal to a range of either 2.424 GHz to 3.232 GHz or 3.232 GHz to 4.040 GHz (APLL0 (block 725) or APLL1 (block 740), respectively). The output of APLL1 740 is passed to DIST1 745 which distributes the outputs of PLL1 (DPLL1 + APLL1). The voltage-controlled oscillator (VCO) output frequency of the APLL is downscaled by a factor of three before being conveyed to the on-chip output dividers and output buffers of the clock synchronizer and synthesizer ASIC of synchronizer module 530.

The clock distribution section comprises a set of dividers (Q) and output drivers dedicated to each output pin. The PLL0 channel incorporates six Q-divider/driver units, while the PLL1 channel has four such units. Each Q-divider offers a 32-bit programmable division depth and programmable phase offset control. In some examples, the drivers operate at speeds up to 500 MHz and can be configured as single-ended or differential output with adjustable output current.

In the embodiment of FIG. 7, synchronizer module 530 includes a clock synchronizer 580 to which are connected a crystal resonator 565 and an oven-controlled ultra-stable oscillator 570. In an example, an AD9545 integrated circuit manufactured by Analogue Devices, Inc., can be configured to be used as clock synchronizer 580. The AD9545 is a general, commercially-available clocking chip that provides clock generator functions with multiple outputs, further details of which can be found at https://www.analog.com/media/en/technical-documentation/data-sheets/ad9545.pdf. The AD9545 supports a number of ITU (International Telecommunications Union) standards and as such is typically used for applications such as telecommunications (e.g., for ground-based cell phone base stations), cable infrastructures, and carrier Ethernet. Notably, the AD9545 is not specifically designed for use in space, and as such is not hardened against radiation, or tested to ensure functionality in radiation-rich environments. However, by taking steps such as turning such chips off during high-radiation events, it has been determined that it is possible to use such commercially-available chips for SAR platforms, including those in space.

Crystal resonator 565 is connected to the system clock input of clock synchronizer 580, and ultra-stable oscillator 570 is connected to one of the reference inputs of clock synchronizer 580. Clock synchronizer 580 uses the clock signal provided by ultra-stable oscillator 570 to compensate the stability of the system clock coming from crystal resonator 565, and to generate output clock signals that are synchronized to input reference clock signals (such as the PPS signal) while benefiting from both the stability of the highly-stable source and the exceptional phase noise performance of crystal resonator 565.

In other words, clock synchronizer 580 synchronizes the output clock (i.e., "REFOUT") to one of the reference clock inputs ("PPS" or "REFCLK_{IN}"), but with the stability characteristics of ultra-stable oscillator 570. As a result, the output clock is as stable as the output signal of ultra-stable oscillator 570, but also in-sync to PPS or REFCLK_{IN} (derived from the GNSS clock signal).

The timekeeping functions of synchronizer module 530 rely on both the numerically-controlled oscillators (NCOs) and the time-to-digital converters (TDCs), which derive their timing from the system clock. Hence, the precision of the NCOs is directly linked to the accuracy of the system clock. This is also true for the frequency calculated from the difference between consecutive TDC timestamps. Consequently, maintaining the stability of the system clock is important for ensuring the accuracy of both the NCOs and TDCs within synchronizer module 530. This stability, in turn, depends on the stability of the system clock source, which, as previously explained, is the output of crystal resonator 565.

However, in practical scenarios, the system clock source can experience frequency instability due to factors such as aging and variations in temperature. Any instability in the system clock source inevitably translates to instability in the NCOs and TDCs. Given the digital nature of the NCOs and TDCs, it is feasible to digitally adjust them to counteract the instability in the system clock. Therefore, by understanding the frequency error associated with the system clock source, appropriate digital corrections can be implemented for the NCOs and TDCs. Essentially, any instabilities in the system clock source can be compensated for digitally.

An application requiring low DPLL loop bandwidth benefits from the use of a very stable system clock source. Using a system clock source that is relatively unstable in the longer term, such a crystal resonator, in conjunction with the DPLL having a narrow loop bandwidth (below approximately 50 Hz) may cause the DPLL to unlock or experience intermittent unlock events.

Therefore, according to some embodiments of the disclosure, the integrated system clock compensation of synchronizer module 530 enables the use of crystal resonator 565 as the system clock source, thereby capitalizing on the very good phase noise performance of the crystal. In addition, as described above, since crystal resonator 565 lacks the desired longer-term stability, stability is provided via the connection of a highly-stable source, i.e., ultra-stable oven-controlled oscillator 570, to one of the reference inputs of clock synchronizer 580. The output of ultra-stable oscillator 570 then serves as the reference frequency to the system clock compensation feature of clock synchronizer 580. The system clock compensation feature allows synchronizer module 530 to benefit from the phase-noise performance of crystal resonator 565 in addition to the timing and frequency stability of ultra-stable oscillator 570. Therefore, the system clock compensation feature allows for a low loop bandwidth DPLL even though the system clock source is a relatively unstable crystal resonator.

In addition, as described above, natural drift in the output signal of ultra-stable oscillator 570 may be corrected/compensated/disciplined using the GNSS-derived synchronization signal passed from clock input module 525 to clock synchronizer 580.

According to some embodiments, SAR signals transmitted from one or more of the SAR satellites may be transmitted in a first polarization (for example, a horizontal or vertical polarization), and echoes of the SAR signals may be recorded in a second polarization (for example, a vertical or horizontal polarization, respectively). This may allow multi-polar SAR data to be captured, which may provide improved target characterization over a single-polarization measurement.

According to some embodiments, the SAR satellites may be orbiting the Earth in Low Earth Orbit (LEO). SAR satellites in LEO are generally in constant line-of-sight to one or more GNSS satellites. Typically, a LEO is in the range of 200-300 km to 1600 km above the Earth's surface.

According to some embodiments, one or more of the SAR satellites may comprise a single-polarized SAR antenna configured to transmit and receive SAR signals having only a single polarization. Such satellites may be cheaper to manufacture than satellites with dual-polarized antenna, and a pair of single-polarized SAR satellites may be used to generate multi-polar SAR data.

According to some embodiments, the SAR image data that is captured according to the methods and systems described herein may comprise both amplitude data and phase data.

According to some embodiments, the synchronization methods and systems described herein may be used to assist with target location or other non-SAR purposes. For example, according to some embodiments, two or more synchronized satellites may be used to record a transmission from a ground-based transmitter or source. In particular, such a method of synchronizing multi-static operation of satellites would comprise: receiving, by a first satellite, a first Global Navigation Satellite System (GNSS) clock signal transmitted from a GNSS satellite of a GNSS satellite network; receiving, by a second satellite, a second GNSS clock signal transmitted from a GNSS satellite of the GNSS satellite network; generating, by the first satellite, a first timing signal; generating, by the second satellite, a second timing signal; adjusting the first and second timing signals based on the respective first and second GNSS clock signals; using the first satellite to record, according to the adjusted first timing signal, a transmission from a source; using the second satellite to record, according to the adjusted second timing signal, the transmission from the source; and determining, based on the recordings, a location of the source. Additional satellites may be used to confirm or increase the accuracy with which the location is determined. This method may be suitably modified to include any of the features described herein. For example, the satellites may be in LEO, and may use the same type of ultra-stable oscillator as described herein for the use of synchronized SAR imaging.

While the disclosure has been presented in the context of using SAR satellites working in a bi-static or multi-static formations to record SAR data (which could be multi-polarized SAR data), the disclosure extends to other forms of SAR platforms, such as high-altitude aircraft (e.g., HAPS - high-altitude platform stations) employing SAR payloads.

In addition, while the disclosure has been presented in the context of using GNSS signals from a GNSS satellite network to synchronize multi-static operations, GNSS signals from multiple different GNSS satellite networks may be used, with an "average" or other synthesized value of their respective GNSS clocks being used for the synchronization.

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, as used herein, the terms coupled, coupling, or connected can indicate that two elements or devices are directly connected to one another or connected to one another through one or more intermediate elements or devices via a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

Use of language such as "at least one of X, Y, and Z," "at least one of X, Y, or Z," "at least one or more of X, Y, and Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

It is furthermore contemplated that any part of any aspect or embodiment discussed in this specification can be implemented or combined with any part of any other aspect or embodiment discussed in this specification.

## Claims

1. A method of synchronizing multi-static operation of synthetic aperture radar (SAR) platforms, comprising:
receiving, by a first SAR platform, a first Global Navigation Satellite System (GNSS) clock signal transmitted from a GNSS satellite of a GNSS satellite network;
receiving, by a second SAR platform, a second GNSS clock signal transmitted from a GNSS satellite of the GNSS satellite network;
generating, by the first SAR platform, a first timing signal;
generating, by the second SAR platform, a second timing signal;
adjusting the first and second timing signals based on the respective first and second GNSS clock signals; and
generating SAR image data, wherein the generating comprises:
using the first SAR platform to transmit a first SAR signal according to the adjusted first timing signal; and
using the second SAR platform to record echoes of the first SAR signal according to the adjusted second timing signal.

2. The method of claim 1, wherein generating the SAR image data further comprises:
using the first SAR platform to record echoes of the first SAR signal according to the adjusted first timing signal.

3. The method of claim 1 or 2, wherein generating the SAR image data further comprises:
using the second SAR platform to transmit a second SAR signal according to the adjusted second timing signal; and
using the first SAR platform to record echoes of the second SAR signal according to the adjusted first timing signal.

4. The method of claim 3, wherein generating the SAR image data further comprises:
using the first SAR platform to record echoes of the first SAR signal according to the adjusted first timing signal; and
using the second SAR platform to record echoes of the second SAR signal according to the adjusted second timing signal.

5. The method of any one of claims 1-4, wherein:
the method further comprises:
receiving, by a third SAR platform, a third GNSS clock signal transmitted from a GNSS satellite of the GNSS satellite network;
generating, by the third SAR platform, a third timing signal; and
adjusting the third timing signal based on the third GNSS clock signal;
and generating the SAR image data further comprises:
using the third SAR platform to record echoes of the first SAR signal according to the adjusted third timing signal.

6. The method of any one of claims 1-3 and 5, wherein:
the method further comprises:
receiving, by a third SAR platform, a third GNSS clock signal transmitted from a GNSS satellite of the GNSS satellite network;
generating, by the third SAR platform, a third timing signal;
adjusting the third timing signal based on the third GNSS clock signal; and
and generating the SAR image data further comprises:
using the third SAR platform to transmit a second SAR signal according to the adjusted third timing signal; and
using the second SAR platform to record echoes of the second SAR signal according to the adjusted second timing signal.

7. The method of any one of claims 1-6, wherein generating the first timing signal comprises:
generating a resonating signal using a crystal resonator or a crystal oscillator; and
generating the first timing signal based on the resonating signal.

8. The method of claim 7, wherein the crystal resonator or the crystal oscillator has an Allan Deviation of no more than 1.3⁻¹² seconds over 30 seconds.

9. The method of any one of claims 1-8, wherein a skew between the first and second GNSS clock signals is no more than 50 ns.

10. The method of any one of claims 1-9, wherein the first SAR signal is transmitted according to a first polarization, and wherein the echoes of the first SAR signal are recorded according to a second polarization.

11. The method of any one of claims 1-10, wherein the first and second SAR platforms are SAR satellites.

12. The method of claim 11, wherein the SAR satellites are orbiting the Earth in Low Earth Orbit (LEO).

13. The method of any one of claims 1-12, wherein each of the first and second SAR platforms comprises a single-polarized SAR antenna configured to transmit and receive SAR signals having only a single polarization.

14. The method of any one of claims 1-13, wherein the generated SAR image data comprises amplitude data and phase data.

15. A system for synchronizing multi-static operation of synthetic aperture radar (SAR) satellites, comprising:
at least a first SAR platform and a second SAR platform; and
one or more computer-readable media storing computer program code configured, when executed by one or more processors, to cause the one or more processors to:
receive, by the first SAR platform, a first Global Navigation Satellite System (GNSS) clock signal transmitted from a GNSS satellite of a GNSS satellite network;
receive, by the second SAR platform, a second GNSS clock signal transmitted from a GNSS satellite of the GNSS satellite network;
generate, by the first SAR platform, a first timing signal;
generate, by the second SAR platform, a second timing signal;
adjust the first and second timing signals based on the respective first and second GNSS clock signals; and
generate SAR image data, wherein the generating comprises:
using the first SAR platform to transmit a first SAR signal according to the adjusted first timing signal; and
using the second SAR platform to record echoes of the first SAR signal according to the adjusted second timing signal.
